# EUROPEAN PATENT APPLICATION

(11) **EP 2 472 453 A1**
(43) Date of publication of application: **04.07.2012**
(21) Application number: 11187608.2
(22) Date of filing: 03.11.2011
(51) Int. Cl.: G06Q 10/00

(54) **System and method for providing augmented reality service**

(30) Priority: 28.12.2010 KR 20100136656
(71) Applicant: Pantech Co., Ltd., Seoul 121-792 (KR)
(72) Inventor: Hong, Jae Man, Seoul 121-792 (KR)
(74) Representative: Herzog, Markus

(57) **Abstract**

A terminal to provide augmented reality (AR) service using AR history information stored in a server includes a communication unit to receive AR history information from the server; and a control unit to receive AR history information from the communication unit, to generate a friend recommendation list based on the AR history information, and to output the friend recommendation list to the terminal. A method for providing AR includes requesting AR history information from a server; receiving the AR history information; generating a friend recommendation list based on the AR history information; and displaying the generated friend recommendation list.

## Description

### CROSS-REFERENCE TO RELATED APPLICATION

This application claims priority from and the benefit under 35 U.S.C. §119(a) of Korean Patent Application No. 10-2010-0136656, filed on December 28, 2010, which is incorporated by reference for all purposes as if fully set forth herein.

### BACKGROUND

FIELD

The present disclosure relates to a system and a method for providing an augmented reality service, and more particularly, to a system and a method for providing a friend recommendation list using augmented reality history information.

DISCUSSION OF THE BACKGROUND

Due to the rapid development of wireless network technology and infrastructure thereof, people may obtain desired data at various locations at various times using mobile terminals, such as smart phones, laptops or personal digital assistants (PDAs). Various services may be provided to a user using such a mobile terminal. Examples of such services may include a social network service (SNS) and an augmented reality (AR) service.

The SNS may enable users to share information in a mobile environment. Twitter® is a typical example. As the SNS, such as Twitter®, has come into wide use, users may share information with other users through networking. That is, a friend recommendation operation may be provided based on location information related to an area where the mobile terminal is used. In addition, the friend recommendation operation may also be provided based upon user interests. The user may register or befriend other users having similar interests as friends to share information with the other users. However, to identify users with similar interests as potential friends, a service provider has to collect information that may be manually inputted in advance. For example, users may be required to manually input "interests", "places visited", "favorite songs", and other similar types of information. If such information is not collected in advance or updated on a regular basis, there may be a limitation in providing such services.

Meanwhile, the AR service has become popular with the spread of smart phones. A variety of useful information may be searched for using a geographical information technique and provided to a user. Although the AR service may provide a large amount of information in real time, there may be a limitation in providing the information that appropriately suits the interest or tendency of the user or in sharing relevant information with other users.

### SUMMARY

Exemplary embodiments of the present invention provide an augmented reality (AR) providing system and a method for to providing a user with a friend recommendation list corresponding to the interest and/or tendency of the user based on AR history information of a terminal.

Additional features of the invention will be set forth in the description which follows, and in part will be apparent from the description, or may be learned by practice of the invention.

Exemplary embodiments of the present invention provide a terminal to provide augmented reality (AR) service using AR history information stored in a server, in which the terminal includes a communication unit to receive first AR history information from the server; and a control unit to receive the first AR history information from the communication unit, to generate a friend recommendation list based on the first AR history information, and to output the friend recommendation list.

Exemplary embodiments of the present invention provide a server including a memory to store augmented reality (AR) history information, the AR history information including first AR history information of a first terminal and second AR history information of a second terminal; a communication unit to receive a request for a friend recommendation list from the first terminal and to transmit a friend recommendation list to the first terminal; and a processor to generate the friend recommendation list based on the stored AR history information.

Exemplary embodiments of the present invention provide an AR providing system including a server to store AR history information; and a first terminal to provide an AR service using the AR history information, in which the first terminal generates a friend recommendation list based on the AR history information stored in the server and outputs the friend recommendation list.

Exemplary embodiments of the present invention provide a method for providing AR including requesting AR history information from a server, the AR history information including first AR history information of a first terminal and a second AR history information of a terminal; receiving the AR history information of the first terminal and the second terminal; generating a friend recommendation list based on the AR history information received from the server; and displaying the generated friend recommendation list.

Exemplary embodiments of the present invention provide a method for providing AR including receiving a request for a friend recommendation list from a first terminal; identifying AR history information of the first terminal and AR history information of a second terminal; generating a friend recommendation list based on the identified AR history information; and transmitting the friend recommendation list to the first terminal.

It is to be understood that both foregoing general descriptions and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a schematic diagram illustrating an augmented reality (AR) providing system according to an exemplary embodiment of the invention.

FIG. 2 is a diagram illustrating attribute information used to compare AR history information of various users in an AR providing system according to an exemplary embodiment of the invention.

FIG. 3 is a diagram illustrating a method for providing a friend recommendation list using a terminal of an AR providing system according to an exemplary embodiment of the invention.

FIG. 4 is a diagram illustrating a method for providing a friend recommendation list using additional information stored in a terminal memory according to an exemplary embodiment of the invention.

FIG. 5 is a diagram illustrating a method for providing a friend recommendation list using a server of an AR providing system according to an exemplary embodiment of the invention.

FIG. 6 is a diagram illustrating a method for providing a friend recommendation list using additional user information received from a terminal according to an exemplary embodiment of the invention.

### DETAILED DESCRIPTION OF THE ILLUSTRATED EMBODIMENTS

The invention is described more fully hereinafter with reference to the accompanying drawings, in which exemplary embodiments are shown. This invention may, however, be embodied in many different forms and should not be construed as limited to the exemplary embodiments set forth therein. Rather, these exemplary embodiments are provided so that this disclosure will be thorough and complete, and will fully convey the scope of this disclosure to those skilled in the art. In the description, details of well-known features and techniques may be omitted to avoid unnecessarily obscuring the presented embodiments.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. Furthermore, the use of the terms a, an, etc. does not denote a limitation of quantity, but rather denotes the presence of at least one of the referenced item. The use of the terms "first", "second", and the like does not imply any particular order, but they are included to identify individual elements. Moreover, the use of the terms first, second, etc. does not denote any order or importance, but rather the terms first, second, etc. are used to distinguish one element from another. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof. It will be further understood that for the purposes of this disclosure, "at least one of" will be interpreted to mean any combination the enumerated elements following the respective language, including combination of multiples of the enumerated elements. For example, "at least one of X, Y, and Z" will be construed to mean X only, Y only, Z only, or any combination of two or more items X, Y, and Z (e.g., XYZ, XZ, YZ).

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Throughout the drawings and the detailed description, unless otherwise described, the same drawing reference numerals are understood to refer to the same elements, features, and structures. The relative size and depiction of these elements may be exaggerated for clarity, illustration, and convenience.

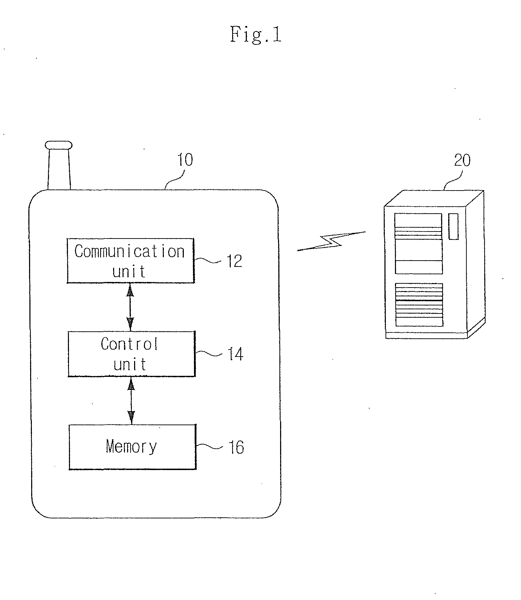

FIG. 1 is a schematic diagram illustrating an augmented reality (AR) providing system according to an exemplary embodiment of the invention.

Referring to FIG. 1, the AR providing system includes a terminal 10 and a server 20.

In an example, the terminal 10 may be a smart phone, a personal digital assistant (PDA), and the like. Further, the terminal 10 may include a communication unit 12, a control unit 14 and a memory 16. The server 20 may stores AR history information to provide an AR service.

The communication unit 12 of the terminal 10 may transmit or receive data to or from the server 20. The communication unit 12 may include an antenna.

The control unit 14 may receive AR history information of one or more terminals from the server 20 through the communication unit 12 to generate a friend recommendation list, which may include potential friends having similar interests or tendencies of a user of the terminal 10, based on the received AR history information. Further, the control unit 14 may provide the generated friend recommendation list to the user of the terminal 10. In an example, the friend recommendation list may include, without limitation, one of name, sex, age, telephone number, social network service (SNS) identification (ID), and the like.

As used herein, the term "AR history information" may refer to AR service use history information of one or more users accessing the server 20 to receive AR service. For example, the AR history information may include, without limitation, personal information of the user, AR use object information, use time information, use location information, search keyword information, search time information, search location information, and the like. In addition, the AR history information may also include additional information inputted by the user. The additional information may be inputted in advance or in real-time.

In an example, personal information of the user may include sex, age, name, address, birthday of the user, and the like. AR use object information may refer to AR information related to an object that was received or searched by the user. Use time information may relate to the time of usage for the respective AR service to search for a relevant subject matter. Search keyword information may include one or more search terms used by the user to identify items of interest, to use the AR service, or to identify potential friends. Search time information may refer to the time the respective search may have been conducted. Search location information may refer to location information searched by the user or the location information of where the search was conducted by the respective user. The memory 16 may store the AR history information and additional user information input information, which may be provided by the user using an input unit (not shown) of the terminal.

In the AR providing system of FIG. 1, the terminal 10 may receive the AR history information of one or more users, which may be stored in the server 20, and recommend users having similar interests or tendencies as the user of the terminal 10 based on the received AR history information as potential friends.

Although the generation of the friend recommendation list may be performed by the control unit 14 of the terminal 10, the generation of the friend recommendation list may be performed by the server 20, instead of or along with the terminal 10. In an example, if the friend recommendation list is generated by the server 20, the server 20 may generate and transmit the friend recommendation list to the terminal 10, and the control unit 14 of terminal 10 may display the friend recommended list on a display unit (not shown) of the terminal 10.

In an example, the friend recommendation list may be generated based on similarity of AR history information of the requesting terminal and other terminals. Similarity of AR history information may be determined by computing a degree of similarity between the AR history information of a requesting terminal, which makes a request for a friend recommendation list, and the AR history information of another terminal. That is, if the degree of similarity in AR history information of the requesting terminal and the other terminal is equal to or greater than a reference value, the user of the other terminal may be generated as a possible friend in the friend recommendation list. In an example, the AR history information used to compute the degrees of similarity may be specified by the user of the terminal by selecting one or more attribute information in the AR history information. Further, one or more attribute information of the AR history information to compute degrees of similarity may be automatically selected based on one or more reference conditions (e.g., location of the requesting terminal at the time of request).

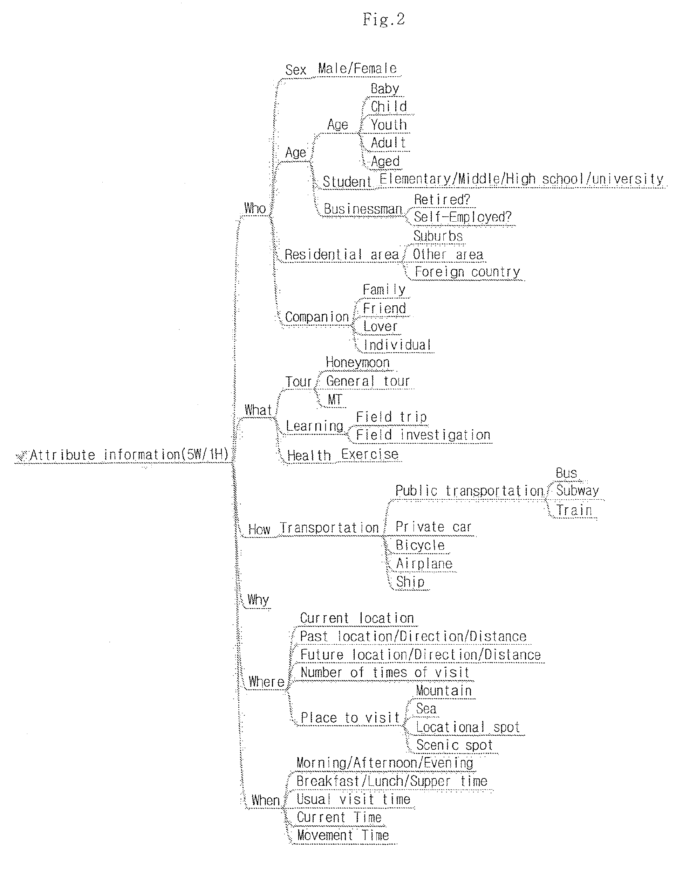

FIG. 2 is a diagram illustrating attribute information used to compare AR history information of various users in an AR providing system according to an exemplary embodiment of the invention.

In an example, the AR history information may be categorized by attribute information. Referring to FIG. 2, detailed attribute information may be displayed based on, without limitation, several categorical fields listed as, "Who", "What", "How", "Why", "Where" and "When". As shown in FIG. 2, the categorical field of "who" may have information related to sex, age, residence, companion information related to a user. The categorical field of "what" may include information on the type of trip or activity the user has engaged in. The categorical field of "how" may have information on the method of travel or execution. The categorical field of "why" may include a reason or a purpose for the activity the user was engaged in. The categorical field of "where" may include current, past, and future intended locations of the user, as well as frequency of visit. Lastly, the categorical field of "when" may indicate the time and/or date of various activities executed or planned by the user. Although there may be more attribute information that may be captured and used to generate the friend recommendation list, the exemplary list is illustrated herein for the purposes of simplicity in its disclosure.

A user may request a friend recommendation based on one or more attribute information. For example, if a user wishes to obtain tour information of a tourist area using the terminal 10, the user may enter in search information to identify potential friends, which may include an area of interest inputted by the requesting user, and/or tour category information selected by the requesting user. The search information of the requesting user may be compared with AR history information of the other users for similarity. As a result, other users having similar interests may be recommended as potential friends based on AR history information. Thus, the user of the terminal 10 may share his or her AR history information to obtain the AR history information of other users.

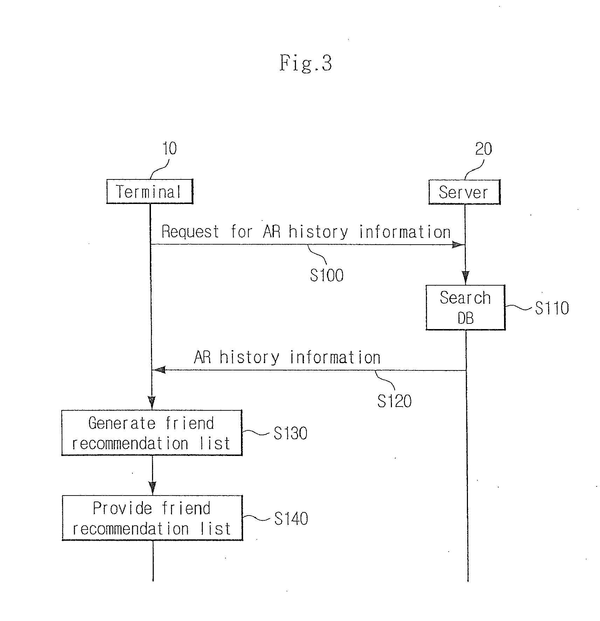

Hereinafter, methods for providing a friend recommendation list using AR history information will be described with reference to FIG. 3, FIG. 4, FIG. 5, and FIG. 6. These methods will be described as performed by or with the AR providing system shown in FIG. 1 for convenience, but these methods are not limited thereto.

FIG. 3 is a diagram illustrating a method for providing a friend recommendation list using a terminal of an AR providing system according to an exemplary embodiment of the invention.

In an example, the AR history information of the terminal 10 and the AR history information of other terminals may be stored in the server 20 of FIG. 1. That is, the AR history information of multiple users may be stored in the server 20. The range of the AR history information may include, without limitation, personal information of the user, AR use object information, use time information, use location information, search keyword information, search time information, search location information and the like. In addition, the AR history information may also include additional information inputted by a user. In an example, the additional information may be set to be shared by the user of the terminal. The additional information may include supplementary information, such as height, weight, blood type, and personal interest information related to the respective user.

FIG. 3 shows the case where the server 20 stores AR history information and the terminal 10 generates and provides a friend recommendation list.

Referring to Fig. 3, if the user wishes to receive the friend recommendation list, the terminal 10 makes a request for the AR history information of the terminal 10 and a different terminal to the server 20 (S100). If the terminal 10 makes the request for the AR history information, the server 20 searches a database (S110) and transmits AR history information to the terminal 10 (S120).

The terminal 10 generates the friend recommendation list based on the AR history information received from the server 20 (S130). More specifically, the friend recommendation list may be generated based on similarity of AR history information of the terminal 10 and other terminal(s). Similarity of AR history information may be determined by computing degrees of similarity between the AR history information of the terminal 10 and the AR history information of other terminals. Accordingly, if the degree of similarity in AR history information of the requesting terminal and the other terminal is equal to or greater than a reference value, the respective user of the other terminal may be generated as a possible friend in the friend recommendation list.

If the friend recommendation list is generated, the terminal 10 provides the friend recommendation list through the display unit (not shown) (S 140) such that the user may view the friend recommendation list to select a friend with similar interests based on the AR history information.

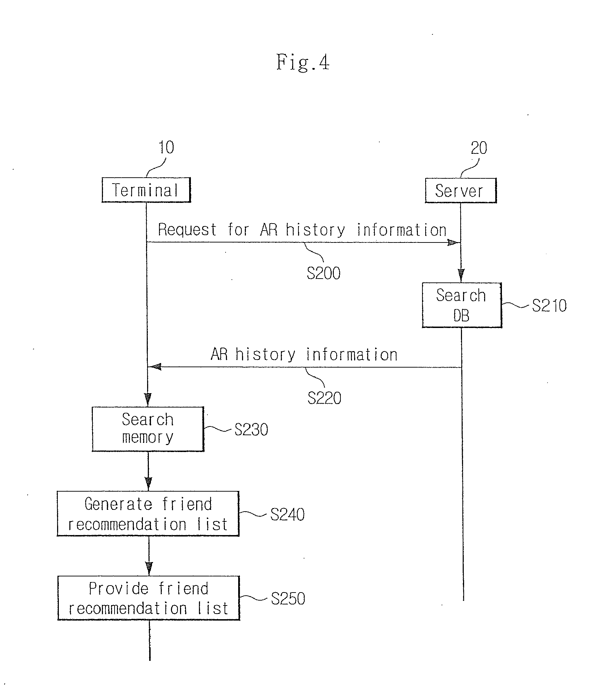

FIG. 4 is a diagram illustrating a method for providing a friend recommendation list using additional information stored in the terminal memory according to an exemplary embodiment of the invention.

The memory 16 of FIG. 1 may store the AR history information of the terminal 10 independently of the server 20 or jointly with the server 20. In addition, the memory 16 of FIG. 1 may also store additional user information, which may be inputted by the user using the input unit (not shown).

Referring to FIG. 4, if the terminal 10 makes a request for the AR history information of the user of terminal 10 and a different user to the server 20 (S200), the server 20 may search a database (DB) (S210) and transmits the AR history information to the terminal 10 (S220).

The terminal 10 receives the AR history information and searches for the additional user information stored in the memory 16 (S230). The terminal 10 generates a friend recommendation list using the AR history information received from the server 20 and the information stored in the memory 16 (S240) and provides the friend recommendation list to the user (S250) using the display unit (not shown). The AR history and/or additional information may be used selectively to generate the friend recommendation list according to a user setting.

In an example, the use of the additional user information stored in the memory 16 of the terminal 10 may allow generation of the friend recommendation list in greater detail according to the user setting. By restricting the provision of additional information, which may not be publicly available information, to the server 20, security may be better ensured.

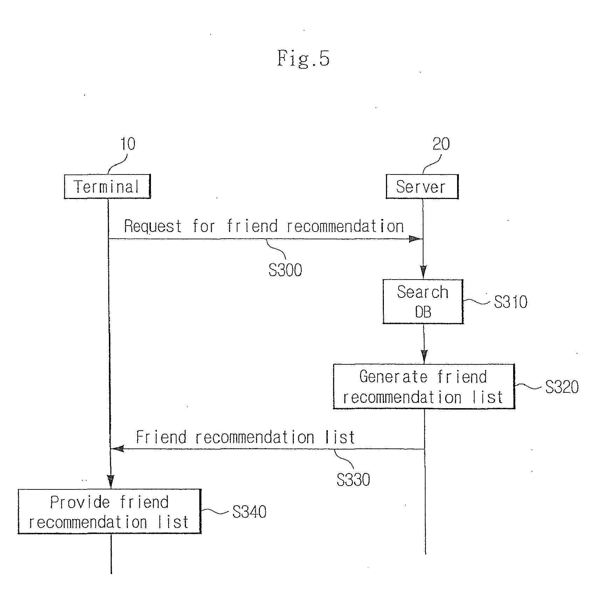

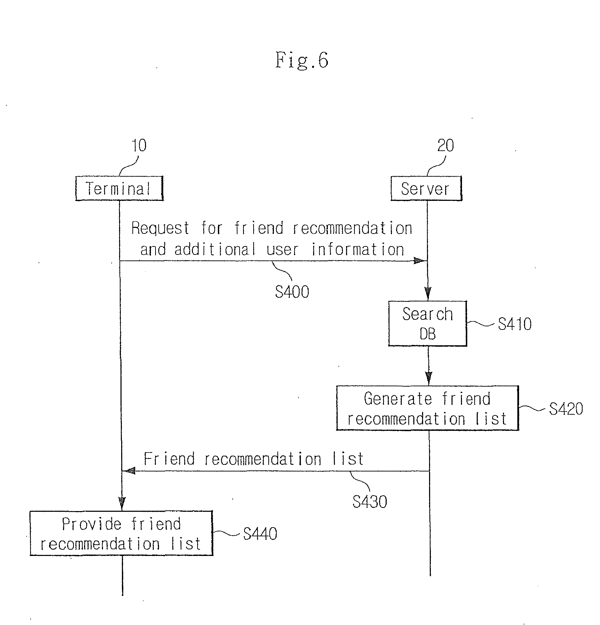

In the methods of FIG. 3 and FIG. 4, the server 20 may store AR history information and the terminal 10 may receive the AR history information to generate the friend recommendation list. However, in this case, since the processing speed of the terminal 10 may be decreased due to excessive load, the friend recommendation list may be generated by the server 20 as shown in FIG. 5 and FIG. 6.

FIG. 5 is a diagram illustrating a method for providing a friend recommendation list using a server of an AR providing system according to an exemplary embodiment of the invention.

Referring to FIG. 5, if the user wishes to receive a friend recommendation list, the terminal 10 makes a request for friend recommendation to the server 20 (S300). If the terminal 10 makes the request for friend recommendation, the server 20 searches a DB for AR history information of the requesting user and other users (S310) and generates a friend recommendation list based on the similarity of the AR history information (S320). More specifically, the generation of the friend recommendation list may be performed based on the AR history information of the requesting user and other users stored in the server 20 by computing a degree of similarity between the AR history information of the requesting user and the AR history information of the other users.

If the friend recommendation list is generated, the server 20 transmits the friend recommendation list to the terminal 10 (S330) and the terminal 10 provides or displays the friend recommendation list to the user (S340).

FIG. 6 is a diagram illustrating a method for providing a friend recommendation list using additional user information received from a terminal according to an exemplary embodiment of the invention.

Referring to FIG. 6, the terminal 10 transmits a request for friend recommendation and the additional user information to the server 20 (S400). The additional user information may refer to information inputted by a user and stored in the memory 16 of the terminal 10. Since the memory 16 of the terminal 10 and the server 20 both store the AR history information of the terminal 10, the AR history information may not be transmitted to the server 20. However, if the AR history information includes information additionally inputted or set by the user, the additional information stored in the terminal 10 may be provided to the server 20 as the additional information.

The server 20 searches the database (S410), generates the friend recommendation list based on the AR history information stored in the server 20 and the additional user information received from the terminal 10 (S420), and provides the friend recommendation list to the terminal (S430).

The terminal 10 receives the friend recommendation list from the server 20 and provides the friend recommendation list to the user using the display unit (S440). By leveraging the server 20 to compute the similarity of AR history information for the other users, the processing speed of the server 20 may be increased relative to the processing speed of the terminal 10, and the friend recommendation list may be generated with a reduced burden on the terminal 10. In addition, if the load of the terminal 10 is reduced, the battery consumption may be decreased. Further, since the additional user information may be inputted by the user, security may be increased.

Examples of information that may be provided when the user selects the friend recommendation list in the AR providing system according to an exemplary embodiment of the invention may include an SNS ID, an email address, a telephone number, and the like. Further, various interfaces may be provided including an interface to provide positioning information for users with a higher degree of similarity at a higher level of the list, and an interface to increase the amount of information as the degree of similarity increases. Examples of various AR providing systems according to exemplary embodiments of the invention are described below.

Example: Tour Information Sharing Scenario

User A uses an AR service while touring various tour attraction sites in Gyeongju in the following order of Cheomseongdae, the Tomb of King Muyeol, Poseokjeong, and Bulguksa. User B is also touring Gyeongju to visit Cheomseongdae, the Tomb of King Muyeol, Poseokjeong, and Bulguksa and wishes to obtain information about opinion of other users, recommended tourist attractions, famous restaurants, and the like using the SNS. In this case, user B may receive the friend recommendation list, which may include user A, based on attribute information selected by user B, which may include tourist attractions, matters of interest associated with tour, favorite foods, and the like in Gyeongju. As a result, user B may be able to share the SNS information with user A.

Example: Offline Friend Making Scenario

User A uses an AR service at Incheon International Airport while waiting to board his or her flight at 10:00 AM, October 26. User B is also waiting to board his or her flight at 10:00 AM, October 26 and wishes to establish SNS network with persons who may use Incheon International Airport with the same departure time, departure date and destination. In this case, user B may receive a friend recommendation list, which may include user A, based on the attribute information selected by the user B, which may include Incheon International Airport, departure time, departure date and destination. As a result, user B may select user A from the friend recommendation list and establish a SNS network with user A. User B may meet user A offline to share tour information with user A and enjoy the waiting time.

Example: Shopping Scenario

User A is wondering if he/she should purchase a laptop manufactured by a K company. User A wishes to receive information related to the respective laptop from other users, such as user recommendation, while viewing information about the respective laptop using an AR service. In this case, user A may select the laptop manufactured by the K company as attribute information and make a request to receive user recommendation from one or more users while using the AR service. The terminal 10 may recommend user B, who has used or reviewed the laptop manufactured by the K company, to user A. As a result, user A may decide whether to purchase the respective laptop based on the user recommendation and/or other information provided by user B.

The terminal, the server and the AR providing system according to the disclosure may extend SNS networking using the AR history information to provide a more active AR service to the user.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

A terminal to provide augmented reality (AR) service using AR history information stored in a server includes a communication unit to receive AR history information from the server; and a control unit to receive AR history information from the communication unit, to generate a friend recommendation list based on the AR history information, and to output the friend recommendation list to the terminal. A method for providing AR includes requesting AR history information from a server; receiving the AR history information; generating a friend recommendation list based on the AR history information; and displaying the generated friend recommendation list.

## Claims

1. A first terminal to provide augmented reality (AR) service using AR history information stored in a server, the first terminal comprising:
a communication unit adapted to receive first AR history information from the server; and
a control unit adapted to receive the first AR history information from the communication unit, to generate a friend recommendation list based on the first AR history information, and to output the friend recommendation list.

2. The first terminal of claim 1, wherein the first AR history information comprises at least one of personal information, AR use object information, use time information, use location information, search keyword information, search time information, and search location information.

3. The first terminal of claim 1 or 2, wherein the friend recommendation list comprises at least one of a name, sex, age, telephone number, and social network service (SNS) ID of a user of a second terminal.

4. The first terminal of any of claims 1 to 3, wherein the control unit is adapted to generate the friend recommendation list based on a similarity of the first AR history information of the first terminal and second AR history information of a second terminal, wherein the similarity is determined by computing a degree of similarity between the first AR history information of the first terminal and the second AR history information of the second terminal.

5. The first terminal of any of claims 1 to 4, further comprising a memory adapted to store the first AR history information of the first terminal,
wherein the control unit is adapted to use the first AR history information of the first terminal stored in the memory to generate the friend recommendation list, and wherein, preferably, the first AR history information further comprises additional user information received through an input unit of the first terminal.

6. A server, comprising:
a memory adapted to store augmented reality (AR) history information, the AR history information comprising first AR history information of a first terminal and second AR history information of a second terminal;
a communication unit adapted to receive a request for a friend recommendation list from the first terminal and to transmit a friend recommendation list to the first terminal; and
a processor adapted to generate the friend recommendation list based on the stored AR history information.

7. The server of claim 6, wherein the AR history information comprises at least one of personal information, AR use object information, use time information, use location information, search keyword information, search time information and search location information.

8. An augmented reality (AR) providing system, comprising:
a server adapted to store AR history information, the AR history information comprising first AR history information of a first terminal and second AR history information of a second terminal; and
the first terminal adapted to provide an AR service using the AR history information,
wherein the first terminal is adapted to generate a friend recommendation list based on the AR history information stored in the server and outputs the friend recommendation list.

9. The system of claim 8, wherein the AR history information comprises at least one of personal information, AR use object information, use time information, use location information, search keyword information, search time information and search location information.

10. A method for providing augmented reality (AR), comprising:
requesting AR history information from a server, the AR history information comprising first AR history information of a first terminal and a second AR history information of a second terminal;
receiving the AR history information;
generating a friend recommendation list based on the AR history information; and
displaying the generated friend recommendation list.

11. The method of claim 10, wherein the AR history information comprises at least one of personal information, AR use object information, use time information, use location information, search keyword information, search time information, and search location information.

12. A method for providing augmented reality (AR), comprising:
receiving a request for a friend recommendation list from a first terminal;
identifying first AR history information of the first terminal and second AR history information of a second terminal;
generating a friend recommendation list based on the identified AR history information; and
transmitting the friend recommendation list to the first terminal.

13. The method of claim 12, wherein the AR history information comprises additional user information of the first terminal.
